# EUROPEAN PATENT APPLICATION

(11) **EP 1 323 471 A1**
(43) Date of publication of application: **02.07.2003**
(21) Application number: 02425788.3
(22) Date of filing: 20.12.2002
(51) Int. Cl.: B01J 35/00, B01J 21/06

(54) **Process for the preparation of articles in titanium coated with a thick layer of anatase, articles so obtainable and use thereof as photocatalysts**

(30) Priority: 20.12.2001 IT RM20010753
(71) Applicant: CENTRO SVILUPPO MATERIALI S.p.A., 00129 Roma (IT)
(72) Inventor: Giannetti, Armando, Centro Sviluppo Materiali SpA, 00129 Roma (IT); Valle, Roberta, Centro Sviluppo Materiali SpA, 00129 Roma (IT); Tului, Mario, Centro Sviluppo Materiali SpA, 00129 Roma (IT)
(74) Representative: Leone, Mario

(57) **Abstract**

Process for the preparation of articles in Titanium coated with a layer of Titanium oxide is described, wherein the metallic Titanium is subjected to the following steps: conditioning of the surface; anodic oxidation treatment, in an electrolytic cell of which it represents the anode, in a bath made of an aqueous solution comprising sulfuric acid, hydrochloric acid and hydrofluoric acid; and forming onto the metallic surface, by effect of electrolysis, an oxide layer having a >1µm thickness and containing a single crystalline phase made of anatase (one of the two allotropic tetragonal shapes of Titanium oxide). Object of the invention are also the articles in Titanium coated with a thick layer of anatase so obtainable, and the use thereof as photocatalysts, under the action of an ultraviolet radiation.

## Description

The invention relates to the field of the preparation of articles in Titanium coated with Titanium oxide, and to the use thereof as photocatalysts.

As it is known, Titanium oxide, TiO₂, is a semiconductor that, under the action of an ultraviolet (UV) radiation, exhibits photocatalytic properties, e.g., catalysing the mineralization of organic compounds like phenol. Both allotropic tetragonal forms in which TiO₂ crystallises, i.e. rutile and anatase (also known as octahedrite) exhibit this effect. However, the photocatalytic efficiency of anatase is markedly greater than that of rutile.

Hence, understandably researcher efforts have focussed on obtaining articles having Titanium oxide layers mainly consisting of anatase and exhibiting a thickness greater than the 0.3 µm wavelength of the UV photon in order to ensure total absorption of the incident radiation.

As it is known, thermally oxidizing at <500°C temperatures for relatively short times fosters Anatase generation. Thus, however, thin layers of oxide are obtained. On the contrary, operating at temperatures in the neighbourhood of 700°C, layers thick yet solely made of rutile are obtainable.

As an alternative method for producing oxide layers, the state of the art also envisages Titanium anodization, i.e. the oxidation reaction occurring directly onto the surface of an article in Titanium employed as the anode in an electrolytic cell. In this case as well thick layers are unobtainable, however oxide structure may be controlled according to voltage applied. In fact, the oxide microstructure obtainable operating at different voltages may be classified as follows:
- <20 V, amorphous structure
- 20-50 V, anatase/near-amorphous oxide mixture
- 50-80 V, microcrystalline anatase
- >80 V, macrocrystalline anatase.

Hence, effort of competent researchers notwithstanding, in the specific field there subsists the demand for articles in Titanium having a surface oxide layer mainly made of anatase and having a thickness greater than the 0.3 µm wavelength of the photon in order to ensure total absorption of the latter.

The present invention meets this demand and also provides further advantages that will be made apparent hereinafter.

In fact, an object of the present invention is a process for the preparation of articles in Titanium coated with a layer of Titanium oxide, in which the metallic Titanium is subjected to the following steps:
- optional conditioning of the surface;
- anodic oxidation treatment, in an electrolytic cell of which it represents the anode, in a bath made of an aqueous solution containing sulfuric acid, hydrochloric acid and hydrofluoric acid; and
- forming onto the metal surface, by effect of electrolysis, of a >1 µm thick layer of oxide containing a single crystalline phase made of anatase.

The metallic Titanium to be subjected to the anodic oxidation treatment may have any one shape, plane, like a sheet, as well as curved, like a tube.

The conditioning of the Titanium surface may be a chemical pickling in an aqueous solution containing 50-150 g/l H₂SO₄ (sulfuric acid) and 5-20 g/l HF (hydrofluoric acid), at temperatures ranging from 15 to 30°C, for times of from 10 to 120 s.

The electrolytic solution may have the following composition expressed in g/l: 50-200 sulfuric acid, 10-80 hydrochloric acid and <10 hydrofluoric acid.

The electrolytic cell may be channel-shaped in order to ensure electrolyte circulation during electrolysis.

The cell cathode may be selected from the group comprising Titanium and stainless steel.

The anodic oxidation treatment can take place under direct current, with a constant interelectrode voltage ranging from 20 to 50 V.

The temperature of the anodic oxidation treatment may range from 20 to 40°C.

The length of the anodic oxidation treatment may range from 60 to 180 min.

A further object of the present invention are the articles in titanium coated with a >1 µm layer of anatase, obtainable with the abovementioned process, and the use thereof as photocatalysts, e.g. for the mineralization, under the action of an UV radiation, of organic compounds like phenol.

Hereto, the present invention has been generally outlined. With the aid of the figures and of the following example, hereinafter embodiments of the invention will be described aimed at making apparent purposes, features, advantages and application modes thereof.

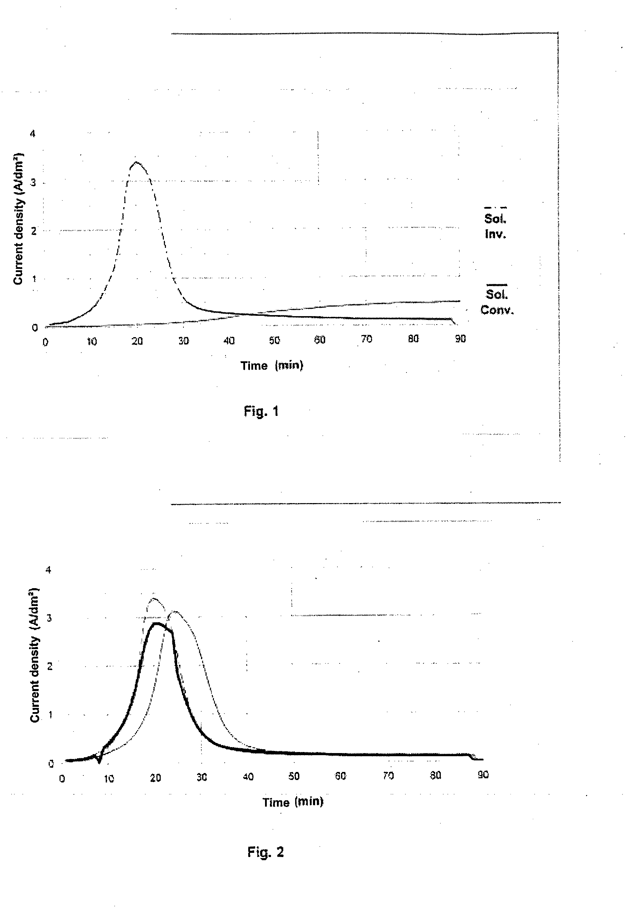

Figure 1 shows the current density pattern, as a function of the anodizing time, for one of the test pieces produced with the electrolytic solution according to the invention, compared to that related to a test piece produced under the same conditions with a conventional electrolytic solution [for the test piece produced with the solution according to the invention in from 10 to 35 min there is obtained a wide zone of elevated current density (from 0.5 to 3.3 A/dm²), whereas for the test piece produced with the conventional electrolytic solution (1N H₂SO₄) the current density stations at values comprised in the range 0.01-0.49 A/dm²].

Figure 2 shows the current density pattern, as a function of the anodizing time, for 3 test pieces produced with an electrolytic solution according to the invention. For all the test pieces there is obtained a wide zone of elevated current density (ranging from 0.5 to 3.3 A/dm²) of a length of about 25 min which becomes apparent at from +10 to +40 min from the start of the testing.

Figure 3 reports the microscopic aspect, taken at the scanning electron microscope, of the metallographic section of one of the test pieces produced with an electrolytic solution according to the invention. At a 2000X magnification the morphology and the thickness of the oxide layer generated with the anodizing are observable.

### EXAMPLE 1

A set of test pieces in Titanium CP (commercial quality), having 0.5 mm thicknesses and 10x20 cm sizes, was conditioned in an aqueous pickling solution containing 100 g/l H₂SO₄ (sulfuric acid) and 10 g/l HF (hydrofluoric acid).

The pickled test pieces were immersed in an electrolytic solution made of 100 g/l sulfuric acid, 60 g/l hydrochloric acid and 7 g/l hydrofluoric acid, and subjected to anodic oxidation at 30 V for 1.5 h. For each test piece produced, the current density pattern along the testing was monitored.

The current density pattern of one of those test pieces, shown in Figure 1, witnesses how the current density peak, peculiar of the electrolytic solution according to the invention, does not appear with the conventional (1 N H₂SO₄) electrolytic solution. The depassivating effect of the solution according to the invention induces, at the elevated current zone, a remarkably quicker growth of the layer.

The current density pattern referring to three produced samples, shown in Figure 2, documents the reproducibility of the depassivating effect caused by the electrolytic solution according to the invention, repeating for all test pieces the intensity and the length of the current peak to which the quick growth of the oxide layer is associated.

The microscopic aspect of the layer, shown in Figure 3, demonstrates the generation of a continuous layer of oxide, having a thickness ranging from 4 to 8 µm, onto the entire surface.

The in-layer presence of a single pure crystalline phase of Titanium oxide in the allotropic tetragonal form of anatase was confirmed by RX diffraction.

The results highlight the effectiveness of the process according to the invention for obtaining, reproducibly and directly onto the surface of the metallic Titanium, a thick layer of grey oxide, having the following features, important to the ends of the application in the field of photocatalysis: ≤10 µm thickness, coating layer consisting of a single pure crystalline phase of anatase, photocatalytic activity greater than that of Titanium coated with Titanium oxides other than anatase.

The three oxidised test pieces in Titanium referred to as F1, F3 and F6 and the reference material Titanium CP were subjected to photocatalytic activity assessment tests by measuring phenol mineralization.

The apparatus used therefor is a sealed vessel in stainless steel, a low-pressure mercury lamp (like the Osram HNS438) and a stainless steel cup containing an aqueous solution of phenol being housed thereinside.

Photocatalytic effectiveness was assessed by COD (Chemical Oxygen Demand) measuring.

After about 8 h under UV radiation, the phenol solutions were analysed.

The results are expressed as percent in the following Table 1.

**Table 1 -**

| Photocatalytic activity | | |
|---|---|---|
| Test pieces | Initial Phenol % | Phenol % at + 8 h |
| F 1 | 100 | 70.3 |
| F 3 | 100 | 68.1 |
| F 6 | 100 | 73.4 |
| CP-Ti | 100 | 91.1 |

Table 1 highlights that the photocatalytic activity of CP-Ti is substantially tripled by virtue of the oxide layer generated onto the test pieces F1, F3 and F6 obtained with the process subject matter of the present invention.

To the abovedescribed process, to the related articles so obtainable and to the use thereof as catalysts, a person skilled in the art, in order to meet further and contingent needs, may effect several further modifications and variants, all however falling within the protective scope of the present invention, as defined by the appended claims.

## Claims

1. Process for the preparation of articles in Titanium coated with a layer of Titanium oxide, **characterised in that** the metallic Titanium is subjected to the following steps:
- conditioning of the surface;
- anodic oxidation treatment, in an electrolytic cell of which it represents the anode, in a bath made of an aqueous solution comprising sulfuric acid, hydrochloric acid and hydrofluoric acid; and
- forming onto the metallic surface, by effect of electrolysis, a layer having a >1 µm thickness and containing a single crystalline phase made of anatase.

2. Process for the preparation of articles in Titanium coated with a thick layer of anatase, wherein the metallic Titanium to be treated may have any one shape, plane as well as curved.

3. Process for the preparation of articles in Titanium coated with a thick layer of anatase according to claim 2, wherein the plane-shaped metallic Titanium is a sheet.

4. Process for the preparation of articles in Titanium coated with a thick layer of anatase according to any one of the preceding claims, wherein the conditioning of the surface is a chemical pickling in an aqueous solution comprising 50-150 g/l sulfuric acid and 5-20 g/l hydrofluoric acid, at temperatures ranging from 15 to 30°C, for times of from 10 to 120 s.

5. Process for the preparation of articles in Titanium coated with a thick layer of anatase according to any one of the preceding claims, wherein the electrolytic solution has the following composition expressed in g/l: 50-200 sulfuric acid, 10-80 hydrochloric acid and <10 hydrofluoric acid.

6. Process for the preparation of articles in Titanium coated with a thick layer of anatase according to any one of the preceding claims, wherein the electrolytic cell is of a channel-shaped type in order to ensure electrolyte circulation during electrolysis.

7. Process for the preparation of articles in Titanium coated with a thick layer of anatase according to any one of the preceding claims, wherein the cell cathode is in Titanium or in stainless steel.

8. Process for the preparation of articles in Titanium coated with a thick layer of anatase according to any one of the preceding claims, wherein the anodic oxidation treatment can take place under direct current, with a constant interelectrode voltage ranging from 20 to 50 V.

9. Process for the preparation of articles in Titanium coated with a thick layer of anatase according to any one of the preceding claims, wherein the temperature of the anodic oxidation treatment ranges from 20 to 40°C.

10. Process for the preparation of articles in Titanium coated with a thick layer of anatase according to any one of the preceding claims, wherein the length of the anodic oxidation treatment ranges from 60 to 180 min.

11. Articles in titanium coated with a >1 µm layer of anatase, obtainable with the process of claims 1 to 10.

12. Use of the articles in titanium coated with a >1 µm layer of anatase of claim 11 as photocatalysts under the action of an ultraviolet radiation.
